# EUROPÄISCHE PATENTANMELDUNG

(11) **EP 1 244 276 A2**
(43) Veröffentlichungstag der Anmeldung: **25.09.2002**
(21) Anmeldenummer: 02006369.9
(22) Anmeldetag: 21.03.2002
(51) Int. Cl.: H04M 1/02

(54) **Handapparat**

(30) Priorität: 23.03.2001 DE 10114703; 27.09.2001 DE 10147694
(71) Anmelder: Peiker, Andreas, 61381 Friedrichsdorf/Ts (DE)
(72) Erfinder: Peiker, Andreas, 61381 Friedrichsdorf/Ts (DE)
(74) Vertreter: Patentanwälte Eisele, Otten, Roth & Dobler

(57) **Zusammenfassung**

Die Erfindung betrifft einen Handapparat (1), bestehend aus einer Gehäuseoberschale (4), auf der ein Display (10) und eine Tastatur (11) angeordnet ist, und einer Gehäuseunterschale (5), die eine Hörmuschel (23) und eine Sprechmuschel (25) aufweist, wobei die Gehäuseoberschale (4) und die Gehäuseunterschale (5), an einer Trennkante (9) aneinander liegen. Hierbei ist die Gehäuseoberschale (3, 4) und die Gehäuseunterschale (3, 5) bereichsweise durch Blenden (6, 7, 8) gebildet, welche wenigstens teilweise mit Öffnungen und/oder mit Vertiefungen und/oder mit Erhebungen versehene Strukturen der Gehäuseoberschale (3, 4) und der Gehäuseunterschale (3, 5) wenigstens teilweise überdecken.

## Beschreibung

Die Erfindung betrifft einen Handapparat nach dem Oberbegriff des Anspruchs 1.

Zur Verwendung in Fahrzeugen sind Handapparate bekannt, die ähnlich wie ein Telefonhörer auf der Unterseite eine Ohrmuschel und eine Sprechmuschel aufweisen und auf der Oberseite über ein Display und eine Tastatur verfügen. Ein derartiger Handapparat ist beispielsweise in der deutschen Offenlegungsschrift DE 36 10 202 A1 in Figur 1 gezeigt. Weiterhin sind als Zubehör für Mobiltelefone sogenannte Abdeckschalen bekannt (siehe z.B. Connect 6/2001 Seiten 160 f.). Diese Abdeckschalen sind dafür vorgesehen, die Oberfläche der Vorder- und Rückseite eines Mobiltelefons mit einer vollständigen, zusätzlichen Abdeckung zu versehen, durch welche das vorhandene Aussehen abgeändert wird.

Zunehmend wird in Fahrzeugen ein edles, der Fahrzeuginnenausstattung angepasstes Aussehen aller Zubehörteile, zu denen auch der Handapparat gehört, verlangt. Hierbei ist sowohl das Aussehen der Oberseite des Handapparats als auch das Aussehen der Unterseite des Handapparats von Bedeutung. Die Oberseite ist insbesondere im aufgelegten Zustand des Handapparats sichtbar. Die Unterseite kommt insbesondere im abgenommenen Zustand des Handapparats beim Telefonieren zur Geltung. Die Mobiltelefone mit Abdeckschale weisen den Nachteil auf, dass hier praktisch eine doppelte Gestaltung der Oberfläche vorgenommen wird. Dies ist insbesondere dann nicht wirtschaftlich, wenn das gewünschte Oberflächendesign schon bei der Herstellung bekannt ist. Den bekannten Handapparaten und den Mobiltelefonen mit Abdeckschale ist der Nachteil gemeinsam, dass sie eine Oberfläche aus einheitlichem Material besitzen, die für den Tast- bzw. Berührungssinn des Nutzers, abgesehen von Tastatur und Display keine Erkennungsmöglichkeiten bietet.

Aufgabe der Erfindung ist es, eine kostengünstige Lösung zur Veredelung von Handapparaten unter Einsparung von Bauteilen mit gleicher Funktion zu finden, die zahlreiche Lösungsvarianten bietet und gleichzeitig dem Nutzer über dessen Tast- bzw. Berührungssinn eine Orientierung am Handapparat erlaubt.

Diese Aufgabe wird ausgehend von den Merkmalen des Oberbegriffs des Anspruchs 1 erfindungsgemäß durch die kennzeichnenden Merkmale des Anspruchs 1 gelöst. Durch die in den Unteransprüchen genannten Merkmale sind vorteilhafte Ausführungen und Weiterbildungen der Erfindung möglich.

Der erfindungsgemäße Handapparat besteht aus einer Gehäuseoberschale und einer Gehäuseunterschale, die bereichsweise durch in diesen aufgenommenen Blenden komplettiert sind, wobei die Blenden wenigstens teilweise Öffnungen und/oder Vertiefungen und/oder Erhebungen in bzw. an der Wandung der Gehäuseschalen verblenden. Durch derartige Blenden ist es möglich, das Erscheinungsbild des Handapparates zu veredeln bzw. zu variieren, ohne Bauteile mit gleicher Funktion übereinander anzuordnen. So können die Blenden beispielsweise farblich gegenüber den Gehäuseschalen abgesetzt sein oder eine metallische Optik aufweisen.

Eine vorteilhafte Ausbildung des Erfindungsgegenstandes sieht vor, an der Gehäuseoberschale eine Oberblende einzusetzen, welche das Display und/oder die Tastatur abdeckt, und an der Gehäuseunterschale eine Unterblende einzusetzen, welche die Hörmuschel und/oder die Sprechmuschel abdeckt. Hierdurch werden die Funktionselemente optisch hervorgehoben und gleichzeitig besteht beim Einsatz von Blenden, deren Oberflächen gegenüber der Gehäuseoberfläche unterschiedliche Eigenschaften aufweisen, die Möglichkeit für den Nutzer, einzelne Funktionselemente durch den Tast- bzw. Berührungssinn zu erkennen. Dies ist insbesondere bei Gehäuseschalen aus Kunststoff und Blenden aus Metall oder mit einem metallischen Überzug gegeben. Bei einer Verblendung der Hörkapsel erkennt der Nutzer über den Berührungssinn beispielsweise sofort, ob der Handapparat richtig zum Ohr positioniert ist, ohne dass zuvor der Gesprächspartner oder ein Klingelzeichen hörbar war.

Gemäß einer besonderen Ausführungsform ist es vorgesehen, die Oberblende fortlaufend in die Unterblende übergehen zu lassen. Hierdurch wird die Einstückigkeit und das geschmeidige, stabile Aussehen des Handapparates betont.

Eine im Querschnitt U-förmige Anordnung von Ober- und Unterblende erhöht den zuvor beschriebenen Eindruck.

Weiterhin ist es vorteilhaft, wenn zwischen der Oberblende und der Unterblende eine zur Kraftübertragung fähige Verbindung besteht. Hierdurch ist es möglich, den Zusammenhalt von Gehäuseoberschale und Gehäuseunterschale durch die Blenden zu unterstützen.

Eine besonders wirksame Unterstützung des Zusammenhalts zwischen Oberschale und Unterschale erfolgt durch eine einteilige, spangen- bzw. U-förmige Ausbildung von Oberblende und Unterblende.

Eine vorteilhafte Befestigung der Blende erfolgt durch die Gehäuseschale unter- oder hintergreifende Nasen und/oder Verklebungen und/oder Klemmungen.

Gemäß einer besonderen Ausführungsform des Erfindungsgegenstandes ist es vorgesehen, dass die Oberfläche der Blende gegenüber der Oberfläche der Gehäuseschale erhaben ist. Hierdurch ist es möglich, auch den Seitenbereich der Blende für die Gestaltung des Handapparates einzusetzen.

Gemäß einer weiteren besonderen Ausführungsform des Gegenstandes ist es vorgesehen, die Oberfläche der Blende plan in die Oberfläche der Gehäuseschale übergehen zu lassen. Hierdurch ist die Zusammengehörigkeit der Gehäusebauteile betont.

Weiterhin wird vorgeschlagen, die Blende gegenüber der Oberfläche der Gehäuseschale zurückspringen zu lassen. Hierdurch entsteht eine Kante, die es wiederum dem Tast- bzw. Berührungssinn des Nutzers erlaubt, einzelne Funktionselemente, wie Display- und Tastaturbereich oder Hörund/oder Sprechmuschel, zu erkennen.

Eine Modifikation des Erfindungsgedankens sieht vor, die Blende zumindest bereichsweise mit einer Beschichtung zu versehen, welche entfernbar, insbesondere abziehbar oder ablösbar ist. Beim Einsatz einer derartigen Beschichtung auf dem Bereich der Blende, welcher das Display abdeckt, können beispielsweise durch Abziehen der Beschichtung, den Blick auf das Display störende Kratzer entfernt werden. Besonders vorteilhaft ist in diesem Zusammenhang eine mehrlagige Beschichtung, die ein wiederholtes Abziehen erlaubt.

Eine zweckmäßige Ausgestaltung des Erfindungsgegenstandes sieht vor, den Handapparat als schnurlosen Handapparat mit einer Stromversorgung auszubilden. Hierdurch steht die gesamte Oberfläche des Handapparates für eine Gestaltung mittels Blenden zur Verfügung, ohne dass auf einen Kabelauslass Rücksicht genommen werden muss.

Eine weitere Modifikation des Erfindungsgegenstandes sieht vor, an der Gehäuseschale im Bereich bzw. unter einer Blende wenigstens eine Öffnung vorzusehen, durch welche der Innenraum bzw. die im Innenraum befindliche Elektronik des Handapparats zugänglich ist. Dies ermöglicht es, einen Speicherchip, eine Speicherkarte, eine Steckkarte oder ein Modul in den Handapparat ein- bzw. auszubauen, ohne hierfür gesonderte, die Optik störende Öffnungen vorsehen oder den Handapparat auseinander bauen zu müssen.

Besonders vorteilhaft ist es in diesem Zusammenhang, die über der Öffnung liegende Blende abnehmbar und/oder schwenk- bzw. klappbar an der Gehäuseschale anzulenken. Hierdurch übernimmt die Blende eine weitere Funktion, ohne dass hierdurch die Optik des Handapparats beeinflusst ist und ohne dass weitere aufwendige Bauteile, wie Klappen oder Deckel, erforderlich sind.

Weitere Einzelheiten der Erfindung werden in der Zeichnung anhand eines schematisch dargestellten Ausführungsbeispiels beschrieben.

Hierbei zeigt:
- Fig. 1: eine perspektivische Ansicht eines Handapparats,
- Fig. 2: eine Ansicht des Handapparats aus der in Fig. 1 dargestellten Blickrichtung II,
- Fig. 3: eine weitere perspektivische Ansicht des in Fig. 1 dargestellten Handapparats,
- Fig. 4: eine perspektivische Ansicht der Unterseite des in Fig. 1 dargestellten Handapparats,
- Fig. 5: eine perspektivische Ansicht der Unterseite des in Fig. 1 dargestellten Handapparats,
- Fig. 6: eine perspektivische Darstellung der Innenseite der Gehäuseoberschale des in Fig. 1 dargestellten Handapparats,
- Fig. 7: eine perspektivische Ansicht der Innenseite der Gehäuseunterschale des in Fig. 1 dargestellten Handapparats,
- Fig. 8: eine perspektivische Einzelansicht der Hörkapselblende des in Fig. 1 dargestellten Handapparats,
- Fig. 9: eine perspektivische Einzelansicht der Displayblende des in Fig. 1 dargestellten Handapparats,
- Fig. 10: eine Seitenansicht der miteinander in Kontakt stehenden Blenden des in Fig. 1 dargestellten Handapparats,
- Figur 11: eine perspektivische Ansicht einer Gehäuseoberschale eines weiteren Handapparats,
- Figur 12: eine perspektivische Ansicht einer Gehäuseunterschale des weiteren Handapparats und
- Figur 13: einen schematischen Teilschnitt durch den weiteren Handapparat.

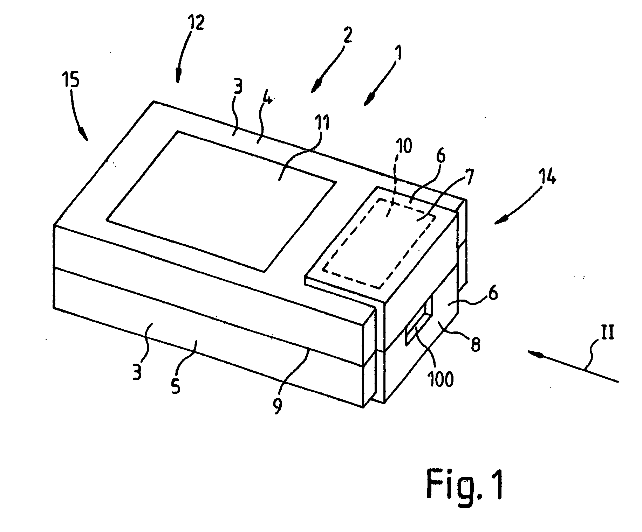

In Fig. 1 ist ein Handapparat 1 dargestellt. Der Handapparat 1 besitzt ein Gehäuse 2, das aus Gehäuseschalen 3 bzw. einer Gehäuseoberschale 4 und einer Gehäuseunterschale 5 besteht, die teilweise durch Blenden 6 bzw. eine Oberblende 7 und eine Unterblende 8 gebildet sind. Die Gehäuseschalen 3 und die Blenden 6 treffen an einer umlaufenden Trennkante 9 aufeinander. Weiterhin weist der Handapparat 1 ein unterhalb der Oberblende 7 liegendes Display 10 und eine Tastatur 11 auf. Einer Oberseite 12 des Handapparats 1 sind somit die Gehäuseoberschale 4 mit der Oberblende 7, das Display 10 und die Tastatur 11 zugeordnet. Einer Unterseite 13 des Handapparats 1 ist die Gehäuseunterschale 5 mit der Unterblende 8 zugeordnet. In einem Kopfbereich 14, in welchem die Blenden 6 einen Teil des Gehäuses bilden, ist weiterhin eine Ausnehmung 100 ausgebildet, die für den Eingriff einer nicht dargestellten Haltenase einer nicht dargestellten Halterung für den Handapparat 1 ausgebildet ist. Dem Kopfbereich 14 liegt ein Fußbereich 15 gegenüber, der im Wesentlichen durch die Gehäuseoberschale 4 und die Gehäuseunterschale 5 gebildet ist.

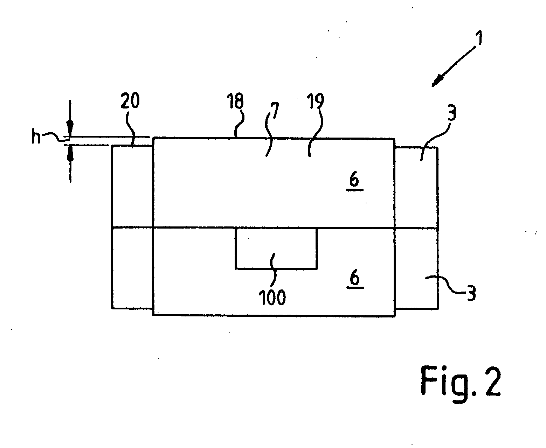

Fig. 2 zeigt eine Ansicht des in Fig. 1 dargestellten Handapparats 1 aus der Pfeilrichtung II. In dieser Ansicht auf den Kopfbereich 14 sind die Gehäuseschalen 3 mit den Blenden 6 und die Ausnehmung 100 zu sehen. Eine Oberfläche 18 der als Displayblende 19 ausgebildeten Oberblende 7 liegt um eine Höhe h erhöht gegenüber einer Oberfläche 20 der Gehäuseoberschale 4.

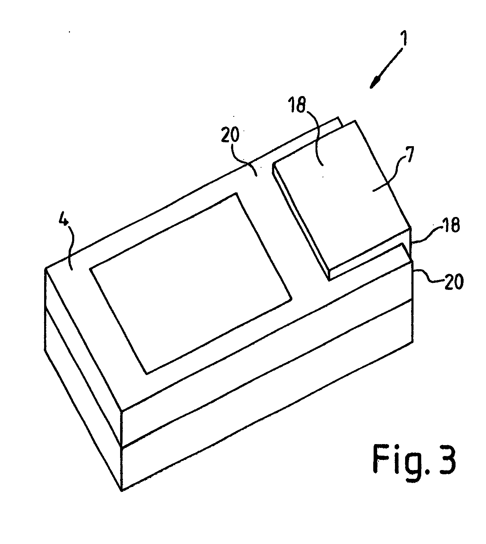

Fig. 3 zeigt eine weitere perspektivische Ansicht des Handapparats 1. In dieser Ansicht ist ein L-förmiger Verlauf der Oberblende 7 sichtbar, wobei die Oberfläche 18 der Oberblende 7 parallel zur Oberfläche 20 der Gehäuseoberschale 4 verläuft.

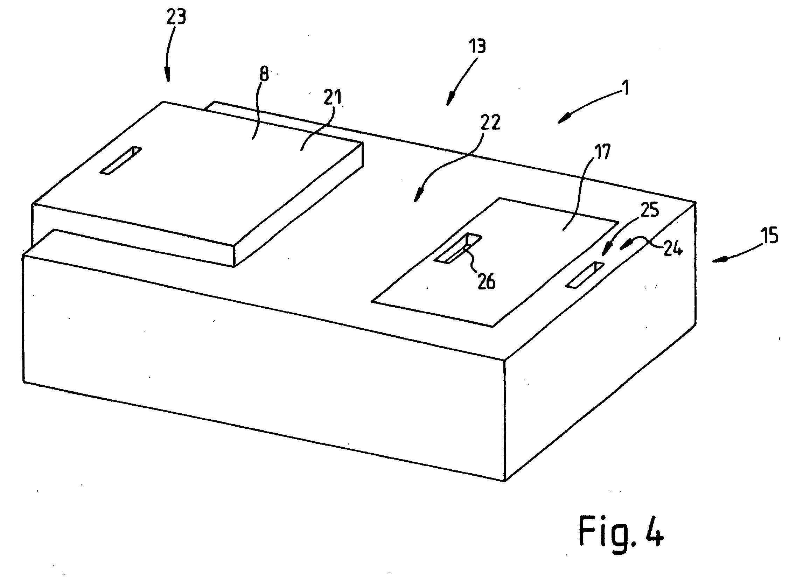

Fig. 4 zeigt eine weitere perspektivische Ansicht des Handapparats 1, wobei der Handapparat 1 von seiner Unterseite 13 gezeigt ist. Auf der Unterseite 13 ist die Unterblende 8 zu sehen, welche als Hörkapselblende 21 ausgebildet ist und zusammen mit einem in einem Innenraum 22 des Handapparats 1 liegenden, nicht dargestellten Lautsprecher eine Hörmuschel 23 bildet. Im Fußbereich 15 des Handapparats 1 ist ein Deckel 17 für ein im Innenraum 22 liegendes Akkufach dargestellt. Eine Ausnehmung 26 ermöglicht ein Öffnen des Deckels 17. Weiterhin befindet sich im Fußbereich 15 ein Sprechbereich 24, der zusammen mit einem nicht dargestellten Mikrofon, das im Innenraum 22 des Handapparats 1 liegt, eine Sprechmuschel 25 bildet.

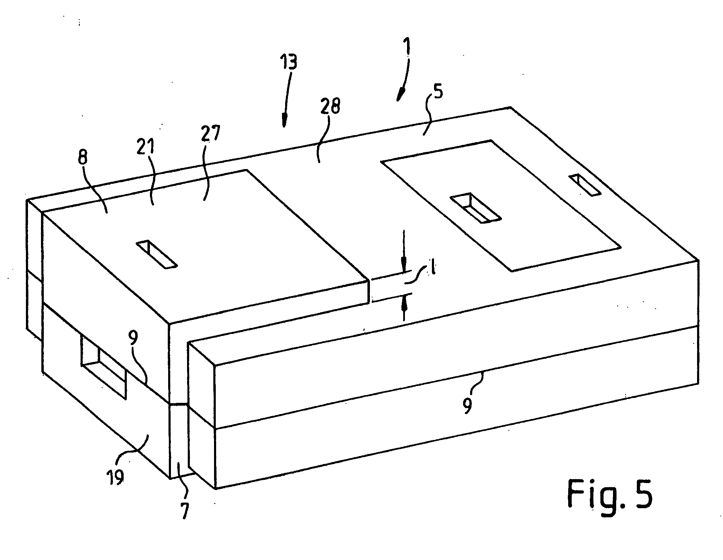

Fig. 5 zeigt den Handapparat 1 in einer weiteren perspektivischen Darstellung mit Blick auf die Unterseite 13. In dieser Ansicht ist der L-förmige Verlauf der Unterblende 8 bzw. Hörkapselblende 21 zu sehen. Analog zur Oberblende 7 liegt eine Oberfläche 27 der Unterblende 8 um eine Höhe 1 gegenüber einer Oberfläche 28 der Gehäuseunterschale 5 nach oben versetzt. Im Bereich der Trennkante 9 gehen die Hörkapselblende 21 und die Displayblende 19 ineinander über.

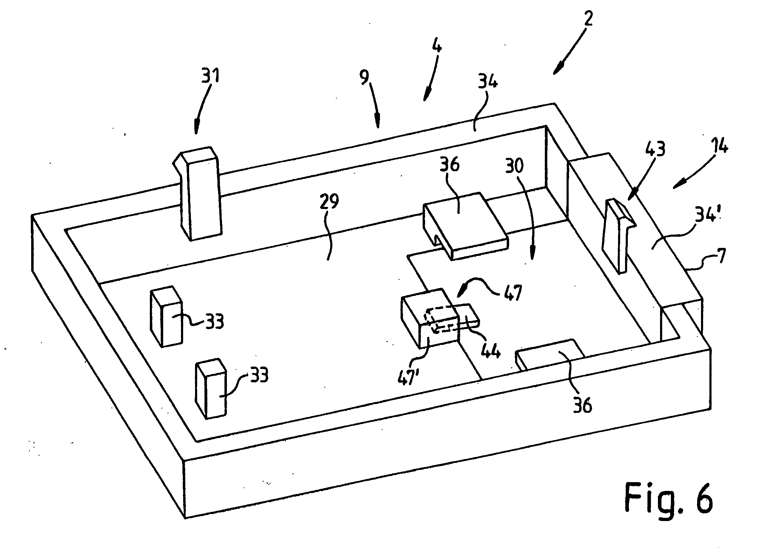

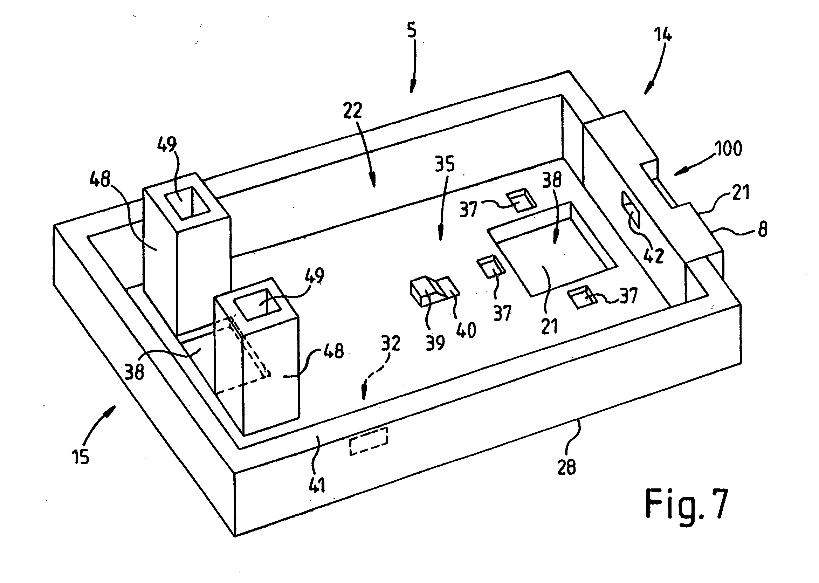

In Fig. 6 ist die Gehäuseoberschale 4 dargestellt, wobei der Betrachter auf eine Innenseite 29 der Gehäuseoberschale 4 blickt. Die Oberblende 7 sitzt in einer Öffnung 30 der Gehäuseoberschale 4 und bildet im Bereich der Öffnung 30 das Gehäuse 2. Weiterhin ist exemplarisch ein Rasthaken 31 dargestellt, über welchen die Gehäuseoberschale 4 in einen Rücksprung 32 (s. Fig. 7) der Gehäuseunterschale eingreift. Beispielhaft dargestellte Verbindungs- und Haltemittel 33 sind für das Abstützen von nicht dargestellten, im Innenraum des Handapparats liegenden Bauteilen, wie z. B. Platinen, und/oder zur weiteren Verbindung mit der Gehäuseunterschale vorgesehen. Im Bereich der Trennkante 9 ist gemäß einer nicht dargestellten Ausführungsvariante eine stufenförmige oder U-förmige Ausbildung eines Randes 34 der Gehäuseoberschale 4 vorgesehen. Eine derartige Profilierung ist vorzugsweise auch an einem Rand 34' der Oberblende 7 vorgesehen. Die Oberblende 7 weist einen Rasthaken 43 für den Eingriff in die nicht dargestellte Unterblende 8 auf. Mit einer Nase 44 bzw. Zunge ist die Oberblende in einem Rücksprung 47 eines Haltelements 47' der Gehäuseoberschale 4 gehalten. Erhebungen 36 bzw. Halter überragen die Öffnung 30 und dienen zur Befestigung des hier nicht dargestellten Displays.

In Fig. 7 ist die Gehäuseunterschale 5 mit der Unterblende 8 bzw. Hörkapselblende 21 in perspektivischer Ansicht dargestellt, wobei eine Innenseite 35 der Gehäuseunterschale 5 zu sehen ist. Im Kopfbereich 14 weist die Gehäuseunterschale 5 auf der Innenseite 35 eine Öffnung 38 auf, welche für die Anordnung des nicht dargestellten Lautsprechers vorgesehen ist. Im Bereich der Öffnung wird das Gehäuse 2 durch die Hörkapselblende 21 komplettiert bzw. gebildet. Im Fußbereich 15 ist ebenfalls eine Öffnung 38 vorgesehen. Diese dient zur Aufnahme des nicht dargestellten Mikrofons. In einem Bereich um die Öffnung 38 sind Vertiefungen 37 mit Hinterschneidungen zur Halterung bzw. Verrastung des nicht dargestellten Lautsprechers angeordnet. Gemäß einem nicht dargestellten Ausführungsbeispiel ist im Fußbereich 15 im Bereich der Öffnung 38 von der Oberfläche 28 der Gehäuseunterschale 5 her die Anordnung einer Sprechkapselblende vorgesehen. Die Hörkapselblende 21 greift mit einer Nase 39 durch eine Öffnung 40 der Gehäuseunterschale 5 und stützt sich auf der Innenseite 35 der Gehäuseunterschale 5 ab. Die Unterblende 8 weist zum Innenraum 22 eine Ausnehmung 42 auf, in welche der in Figur 6 dargestellte Rasthaken 43 einrastet. Somit entsteht aus den Blenden 6 im zusammengesetzten Zustand eine formschlüssig verbundene Einheit. Für den in Figur 6 exemplarisch dargestellten Rasthaken 31 zur Verbindung der Gehäuseschalen 3 sieht die Gehäuseunterschale 5 eine Ausnehmung 32 vor (gestrichelt dargestellt). Entsprechend der in den Ausführungen zu Figur 6 formulierten, nicht dargestellten Ausführungsvariante weist auch ein Rand 41 der Gehäuseunterschale 5 und vorzugsweise auch ein Rand 41' der Unterblende 8 eine stufenförmige Ausbildung auf. Hierbei sind die Ränder der Gehäuseschalen bzw. Blenden so ausgebildet, dass diese sich gegenseitig abstützen und/oder ineinander greifen und das Gehäuse stabilisieren. Auf der Innenseite 35 angeordnete Verbindungs- und Haltemittel 48 wirken mit den in Figur 6 dargestellten Verbindungs- und Haltemitteln 33 zusammen, wobei die Verbindungs- und Haltemittel 33 in Schächte 49 der Verbindungs- und Haltemittel 48 eintauchen.

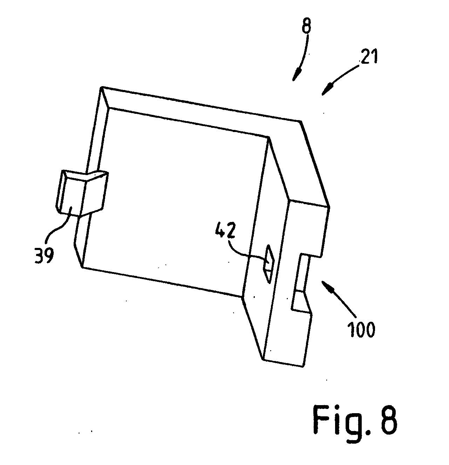

In Fig. 8 ist die Unterblende 8 bzw. Hörkapselblende 21 mit der Nase 39 und der Ausnehmung 42 dargestellt. Weiterhin ist die Ausnehmung 100 zu sehen.

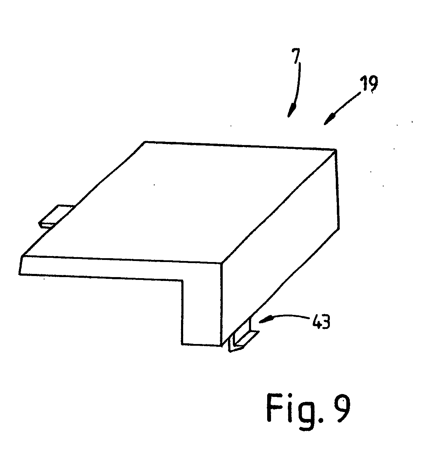

Fig. 9 zeigt die Oberblende 7 bzw. Displayblende 19 in perspektivischer Ansicht. Der Rasthaken 43 dient zur Verbindung der Oberblende 7 mit der Unterblende. Die Nase 44 dient zur Einhängung der Oberblende 7 in die Gehäuseoberschale 4.

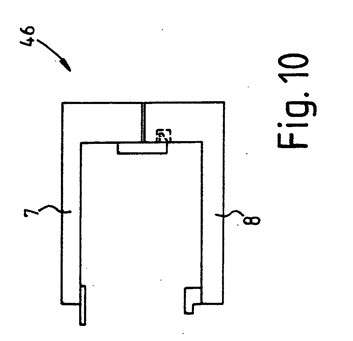

Fig. 10 zeigt die Oberblende 7 und die Unterblende 8 in Seitenansicht in der Einbausituation. In dieser Einbausituation bilden die Oberblende 7 und die Unterblende 8 die Einheit 46, welche die Form und die Funktion einer Spange bzw. Klammer 46' aufweist. Die Spangen- bzw. Klammerfunktion der Blenden 6 bewirkt ein Zusammenhalten der Schalen 3 durch die Blenden im Kopfbereich. Die L-förmige Ausbildung der Blenden 6 erlaubt eine einfache Herstellung und eine gute Handhabung beim Bedrucken bzw. Beschichten.

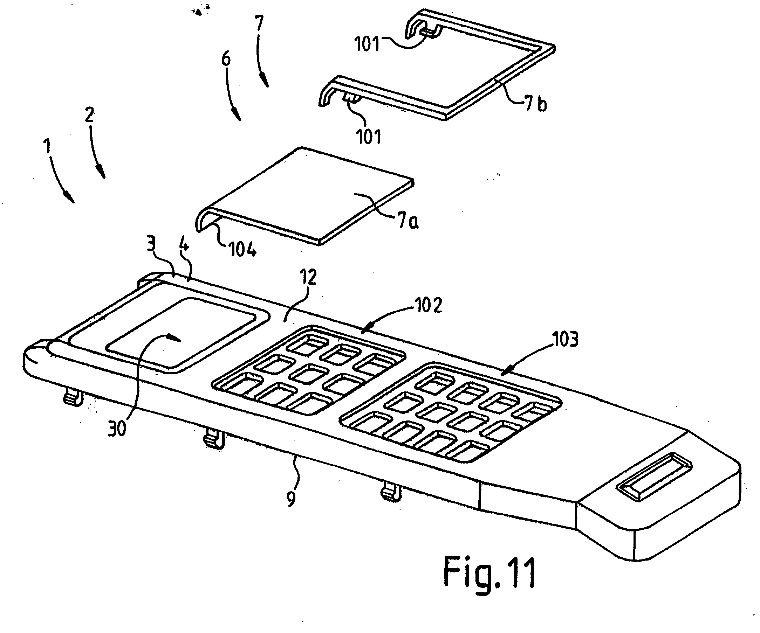

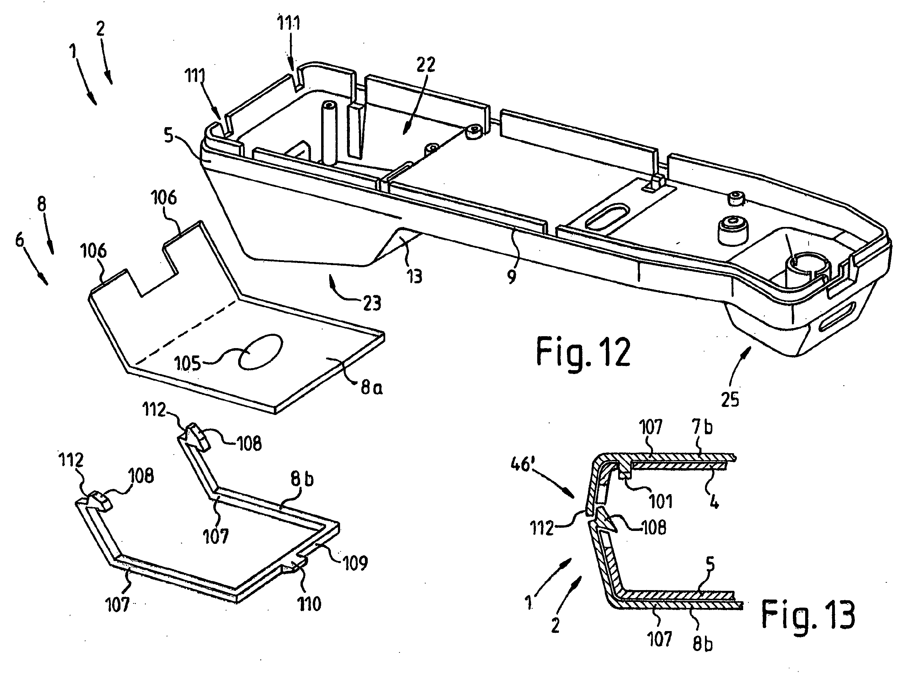

In Figur 11 ist eine Gehäuseschale 3 bzw. eine Gehäuseoberschale 4 eines Gehäuses 2 eines weiteren Handapparats 1 als Explosionszeichnung dargestellt. Die Gehäuseoberschale 4 weist eine Öffnung 30 auf, unter der ein nicht dargestelltes Display angeordnet ist. Diese Öffnung 30 wird durch eine Blende 6 bzw. Oberblende 7 überdeckt. Die Oberblende 7 ist zweiteilig ausgebildet und besteht aus einer Abdeckscheibe 7a und einem Rahmen 7b. Der Rahmen 7b nimmt die Abdeckscheibe 7a umlaufend auf. Um einen Staubeintritt in das Gehäuse 1 zu vermeiden, ist die Abdeckscheibe 7a mit nicht dargestelltem doppelseitigen Klebeband auf einer Oberseite 12 der Gehäuseoberschale 4 fixiert. Der Rahmen 7b weist zwei Schnapphaken 101 auf, welche im montierten Zustand der Oberblende 7 durch nicht dargestellte Öffnungen in der Gehäuseoberschale 4 treten und diese hintergreifen. Weiterhin ist an der Gehäuseoberschale 4 in Feldern 102, 103 eine nicht dargestellte Tastatur angeordnet. Durch die Schnapphaken 101 ist der Rahmen 7b und die von diesem teilweise überdeckte Abdeckscheibe 7a an der Gehäuseoberschale 4 fixiert. Die Gehäuseoberschale 4 weist eine umlaufende Trennkante 9 auf, mit welcher diese mit einer Gehäuseunterschale (siehe Figur 12) in montiertem Zustand in Kontakt steht. Die Trennkante 9 ist bereichsweise durch eine Kante 104 der Abdeckscheibe 7a gebildet.

In Figur 12 ist die erwähnte Gehäuseunterschale 5 des Gehäuses 2 des Handapparates 1 in einer perspektivischen Explosionsansicht dargestellt. Eine Blende 6 bzw. eine Unterblende 8 ist analog zu der in Figur 11 dargestellten Oberblende zweiteilig ausgeführt. Die Unterblende 8 ist durch eine Abdeckscheibe 8a und einen Rahmen 8b gebildet. Die Gehäuseunterschale 5 weist an einer Unterseite 13 eine Hörmuschel 23 und eine Sprechmuschel 25 auf. Die Hörmuschel 23 ist in zusammengebauten Zustand durch die Unterblende 8 verblendet, wobei die Gehäuseunterschale 5 im Bereich der Unterblende 8 nicht dargestellte Durchbrechungen für eine Schallaustritt aufweist. Austretende Schallwellen werden durch einen in einem Innenraum 22 des Handapparats 1 angeordneten, nicht dargestellten Lautsprecher erzeugt. Für den Schalldurchtritt weist die Abdeckscheibe 8a ebenfalls einen Durchbruch 105 (schematisch dargestellt) auf. Die Gehäuseunterschale 5 besitzt eine umlaufende Kante 9, an welcher diese im zusammengebauten Zustand mit der in Figur 12 dargestellten Gehäuseoberschale in Kontakt tritt. Bereichsweise ist diese Trennkante auch durch Kanten 106 der Abdeckscheibe 8a gebildet. Der u-förmige Rahmen 8b weist an freien Schenkeln 107 Haken 108 auf. An einer Querverbindung 109 besitzt der Rahmen 8b eine Nase 110. Die Nase 110 untergreift einen nicht dargestellten, hinterschnittenen Rücksprung auf der Unterseite 13 der Gehäuseunterschale 5. Nachdem die Abdeckscheibe 8a mit nicht dargestelltem, doppelseitigem Klebeband im Bereich der Hörmuschel 23 an der Gehäuseunterschale 5 befestigt ist, erfolgt ein Aufsetzen des Rahmens 8b auf die Abdeckscheibe 8a. Hierbei tritt der Rahmen 8b mit der Nase 110 in die nicht dargestellte, hinterschnittene Ausnehmung ein und greift mit den Haken 108 durch an der Gehäuseunterschale 5 angeordnete Schlitze 111 in den Innenraum 22. Nach dem Aufsetzen der in Figur 11 dargestellten Gehäuseoberschale auf die Gehäuseunterschale 5 werden die Haken 108 des Rahmens 8b durch freie Schenkel des an der Gehäuseoberschale angeordneten Rahmens im Innenraum 22 gehalten. Hierbei steht der Rahmen der Gehäuseoberschale mit Kontaktflächen 112 der Haken 108 in flächigem Kontakt. Ein Abnehmen der Unterblende 8 bzw. ihrer Komponenten 8a, 8b ist somit erst nach einer Demontage der Gehäuseoberschale möglich. Im zusammengebauten Zustand des Handapparats 1 liegen die Kanten 106 der Abdeckscheibe 8a an der Kante 104 der Abdeckscheibe 7a an.

In Figur 13 ist ein schematischer, vereinfachter Teilschnitt durch das Gehäuse 2 des Handapparat 1 dargestellt. Der Schnitt verläuft im Bereich von Schenkeln 107 der Rahmen 7b, 8b, welche das Gehäuseoberteil 4 und das Gehäuseunterteil 5 gemeinsam mit den nicht dargestellten Blenden 7a, 8a wie eine Spange 46' umgreifen. Der Haken 108 des Rahmens 8b ist an der Kontaktfläche 112 durch den Rahmen 7b gehalten. Der Schnapphaken 101 des Rahmens 7b untergreift bzw. hintergreift die Gehäuseoberschale 4.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch vor, dass eine Gehäuseblende abnehmbar, abschwenkbar, abklappbar oder verschiebbar am Gehäuse angelenkt ist und durch eine unter dieser liegenden Öffnung ein Zugang in den Innenraum des Handapparats gegeben ist.

### Bezugszeichenliste:

- 1: Handapparat
- 2: Gehäuse
- 3: Gehäuseschale
- 4: Gehäuseoberschale
- 5: Gehäuseunterschale
- 6: Blende
- 7: Oberblende
- 8: Unterblende
- 9: Trennkante
- 10: Display
- 11: Tastatur
- 12: Oberseite
- 13: Unterseite
- 14: Kopfbereich
- 15: Fußbereich
- 16 17: Deckel (für Akkufach)
- 18: Oberfläche von 7
- 19: Displayblende
- 20: Oberfläche von 4
- 21: Hörkapselblende
- 22: Innenraum von 1
- 23: Hörmuschel
- 24: Sprechbereich
- 25: Sprechmuschel
- 26: Ausnehmung
- 27: Oberfläche von 8
- 28: Oberfläche von 5
- 29: Innenseite von 4
- 30: Öffnung in 4
- 31: Rasthaken an 4
- 32: Ausnehmung in 5
- 33: Verbindungs- und Haltemittel
- 34: Rand von 4
- 34': Rand von 7
- 35: Innenseite von 5
- 36: Erhebung
- 37: Vertiefung
- 38: Öffnung in 5
- 39: Nase von 8, 21
- 40: Öffnung in 5
- 41: Rand von 5
- 41': Rand von 8
- 42: Ausnehmung von 8, 21
- 43: Rasthaken von 7, 19
- 44: Nase von 7, 19
- 45: Anlagekante von 7, 19
- 46: Einheit
- 46': Spange/Klammer
- 47: Rücksprung in 47'
- 47': Halteelement
- 48: Verbindungs- und Haltemittel
- 100: Ausnehmung
- 101: Schnapphaken
- 102: Feld
- 103: Feld
- 104: Kante von 7a
- 105: Durchbruch
- 106: Kante von 8a
- 107: Schenkel von 7b, 8b
- 108: Haken von 8b
- 109: Querverbindung von 8b
- 110: Nase von 8b
- 111: Schlitz in 5
- 112: Kontaktfläche von 108

## Patentansprüche

1. Handapparat (1), bestehend aus einer Gehäuseoberschale (4), auf der ein Display (10) und eine Tastatur (11) angeordnet ist, und einer Gehäuseunterschale (5), die eine Hörmuschel (23) und eine Sprechmuschel (25) aufweist, wobei die Gehäuseoberschale (4) und die Gehäuseunterschale (5), an einer Trennkante (9) aneinander liegen, **dadurch gekennzeichnet, dass** die Gehäuseoberschale (3, 4) und die Gehäuseunterschale (3, 5) bereichsweise durch Blenden (6, 7, 8, 19, 21) gebildet ist, welche wenigstens teilweise mit Öffnungen (30, 38) und/oder mit Vertiefungen (37) und/oder mit Erhebungen (36) versehene Strukturen der Gehäuseoberschale (3, 4) und der Gehäuseunterschale (3, 5) wenigstens teilweise überdecken.

2. Handapparat nach einem der vorhergehenden Ansprüche, **dadurch gekennzeichnet, dass** eine in der Gehäuseoberschale (3, 4) befestigte Blende (7, 19) im Bereich des Displays (10) und/oder der Tastatur (11) angeordnet ist, und eine in der Gehäuseunterschale (3, 5) befestigte Blende (8, 21) im Bereich der Hörmuschel (23) und/oder der Sprechmuschel (25) angeordnet ist.

3. Handapparat nach einem der vorhergehenden Ansprüche, **dadurch gekennzeichnet, dass** die in der Gehäuseoberschale (3, 4) befestigte Blende (7, 19) an der Trennkante (9) fortlaufend in die in der Gehäuseunterschale (3, 5) befestigte Blende (8, 21) übergeht.

4. Handapparat nach einem der vorhergehenden Ansprüche, **dadurch gekennzeichnet, dass** die in der Gehäuseoberschale (3, 4) angeordnete Blende (7, 19) und die in der Gehäuseunterschale (3, 5) angeordnete Blende (8, 21) einen im Querschnitt U-förmigen, spangenartigen Blendenaufsatz (46, 46') bilden.

5. Handapparat nach einem der vorhergehenden Ansprüche, **dadurch gekennzeichnet, dass** die in der Gehäuseoberschale (3, 4) angeordnete Blende (7, 19) und die in der Gehäuseunterschale (3, 5) angeordnete Blende (8, 21) sich hintergreifen und/oder ineinander eingreifen und/oder miteinander verrasten (42, 43).

6. Handapparat nach einem der vorhergehenden Ansprüche, **dadurch gekennzeichnet, dass** die in der Gehäuseoberschale (3, 4) befestigte Blende (7, 19) einteilig mit der an der Gehäuseunterschale (3, 5) befestigten Blende (8, 21) ausgebildet ist.

7. Handapparat nach einem der vorhergehenden Ansprüche, **dadurch gekennzeichnet, dass** die Blende (6, 7, 8, 19, 21) durch Rastnasen und/oder Nasen (39, 44) und/oder Verklebungen und/oder Klemmungen an der Gehäuseoberschale (3, 4) und/oder der Gehäuseunterschale (3, 5) festgelegt ist.

8. Handapparat nach einem der vorhergehenden Ansprüche, **dadurch gekennzeichnet, dass** die Blende (6, 7, 8, 19, 21) wenigstens bereichsweise über die Oberfläche (20, 28) der Gehäuseoberschale (3, 4) und/oder Gehäuseunterschale (3, 5) hinaus steht.

9. Handapparat nach einem der vorhergehenden Ansprüche, **dadurch gekennzeichnet, dass** die Blende (6, 7, 8, 19, 21) wenigstens bereichsweise plan in die Oberfläche (20, 28) der Gehäuseoberschale (3, 4) und/oder Gehäuseunterschale (3, 5) übergeht.

10. Handapparat nach einem der vorhergehenden Ansprüche, **dadurch gekennzeichnet, dass** die Blende (6, 7, 8, 19, 21) wenigstens bereichsweise gegenüber der Oberfläche (20, 28) der Gehäuseoberschale (3, 4) und/oder Gehäuseunterschale (3, 5) zurückspringt.

11. Handapparat nach einem der vorhergehenden Ansprüche, **dadurch gekennzeichnet, dass** die Blende (6, 7, 8, 19, 21) eine metallische Beschichtung, insbesondere ein Chrombeschichtung und/oder Aluminiumbeschichtung aufweist.

12. Handapparat nach einem der vorhergehenden Ansprüche, **dadurch gekennzeichnet, dass** die Blende (6, 7, 8, 19, 21) durch wenigstens zwei unterschiedliche nebeneinander und/oder übereinander liegende Beschichtungen veredelt ist.

13. Handapparat nach Anspruch 11 oder 12, **dadurch gekennzeichnet, dass** wenigstens eine Beschichtung zumindest bereichsweise entfernbar, insbesondere abziehbar oder ablösbar ist.

14. Handapparat nach einem der vorhergehenden Ansprüche, **dadurch gekennzeichnet, dass** der Handapparat (1) als schnurloser Handapparat (1) bzw. schnurloses Telefon ausgebildet ist, der mit einer Sende- und Empfangsstation in Verbindung steht und insbesondere eine eigene Stromversorgung aufweist.

15. Handapparat nach einem der vorhergehenden Ansprüche, **dadurch gekennzeichnet, dass** die Gehäuseoberschale (3, 4) und/oder die Gehäuseunterschale (3, 5) im Bereich der Blende (6, 7, 8, 19, 21) wenigstens eine Aussparung aufweist, durch welche ein Innenraum des Handapparats zugänglich ist.

16. Handapparat nach einem der vorhergehenden Ansprüche, **dadurch gekennzeichnet, dass** die Blende (6, 7, 8, 19, 21) abnehmbar und/oder schwenk- bzw. klappbar an der Gehäuseoberschale (3, 4) und/oder der Gehäuseunterschale (3, 5) angelenkt ist.
